(19) Europäisches Patentamt

European Patent Office

Office européen des brevets

(11) EP 0 456 487 B1

(12) EUROPEAN PATENT SPECIFICATION

(45) Date of publication and mention
of the grant of the patent:
16.04.1997 Bulletin 1997/16

(51) Int Cl.6: G02B 5/28, G02B 5/26,
C03C 17/36

(21) Application number: 91304168.7

(22) Date of filing: 09.05.1991

(54) **Interference filters**

Interferenz-Filter

Filtres interférentiels

(84) Designated Contracting States:
AT BE CH DE DK ES FR GB IT LI LU NL SE

(30) Priority: 10.05.1990 US 522266

(43) Date of publication of application:
13.11.1991 Bulletin 1991/46

(73) Proprietor: THE BOC GROUP, INC.
Murray Hill, New Jersey 07974 (US)

(72) Inventor: Wolfe, Jesse D.
San Ramon, California 94583 (US)

(74) Representative: Bousfield, Roger James et al
The BOC Group plc
Chertsey Road
Windlesham Surrey GU20 6HJ (GB)

(56) References cited:
EP-A- 0 303 109          DE-A- 2 345 760
GB-A- 2 052 787          GB-A- 2 135 697
US-A- 4 337 990          US-A- 4 462 883

## Description

This invention relates generally to infrared interference filters, and more particularly, to a durable low-emissivity thin film interference filter.

The use of transparent panels in buildings, vehicles and other structures for controlling solar radiation is quite prevalent today. The goal of solar control is to emit light while excluding much of the solar energy, thus decreasing the amount of air condition or cooling required, and conserving energy. In addition, modified glass as a structural material provides the colour flexibility architects desire.

Various processes have been employed to alter the optical properties of these panels, including coating glass or plastic substrates by various techniques such as electrolysis, chemical vapour deposition and physical vapour deposition, including sputtering with planar magnetrons. For instance, thin metal films have been deposited on glass or plastic to increase the reflectance of solar radiation. Windows deposited with a multi-layer dielectric-metal-dielectric coating that exhibits high visible transmittance, and high reflectivity and low emissivity in the infrared range, are even more energy efficient. The index of refraction of the dielectric layer is preferably 2.0 or greater in order to minimise the visible reflectance and enhance the visible transmittance of the window. This dielectric layer which often consists of metal oxide coating also offers additional protection to the fragile metal films. The optical properties of panels can also be modified by altering the composition of the substrate material. Nevertheless, interference filter panels manufactured by the above-described methods have been only partially successful in reflecting solar radiation to the degree required for significant energy conservation.

Another problem associated with interference filters is their structural integrity, particularly their inability to withstand harsh environmental conditions. Satisfactory coatings for architectural applications require that the coating process be capable of producing a film of uniform composition and thickness. Further, the process must not disturb or otherwise degrade the substrate by overheating. Currently, even when a uniform film is produced, it usually must be protected from the environment. For instance, architectural panels are often mounted so that the coated film is on the interior surface not exposed to the weather. Often, coated glass is sealed as part of double glazed window unit in which the coating lies on an inside surface where the coating is protected by glass from abrasion and environmental materials which could cause corrosion and degrade the optical properties of the coating. However, when a panel is mounted such that the reflectant film is on an inner surface, the solar radiation must pass through the substrate twice, first as it enters and then as it exits, thus warming the substrate even more than a single pass.

Current transparent panels having high reflectivity for solar radiation are unsatisfactory in that the panels are subject to chemical and mechanical degradation and reflect colour of visible light over a wide band.

The present invention is concerned with the provision of a durable, thin-film interference filter which can in general transmit visible light while reflecting infrared radiation, thus having a low emissivity value. It is also concerned with the provision of an interference filter which gives less reflected colour of visible light over a wide band.

In accordance with the invention, there is provided a durable optical interference filter comprising:

- a transparent substrate;
- a first substantially transparent dielectric layer;
- a first metal precoat layer;
- a partially reflective metal layer;
- a second metal precoat layer; and
- a second substantially transparent dielectric layer

characterised in that:

- the thickness of the first and second dielectric layers is comprised between 30 and 90 nm;
- the thickness of the first and second precoat layers is comprised between 0.5 and 2 nm;
- the thickness of the partially reflective metal layer is comprised between 4 and 15 nm; and
- the second dielectric layer comprises silicon nitride.

In one preferred embodiment of the invention, the interference filter comprises a glass substrate onto which is deposited a thin-film design consisting of five layers, namely: silicon nitride, nickel-chromium alloy, silver, nickel-chromium alloy, and silicon nitride.

In all embodiments, it is preferred for the final layer to comprise a dielectric material layer.

In this preferred embodiment, the interference filter offers excellent solar control. In addition, the durability of the film obviates the need for a thick protective glass covering. Indeed, the filter when coated on panels can be utilised with the film exposed to the exterior of buildings. Finally, by changing the materials and thicknesses of the layers in the film it is possible to vary the optical and electrical characteristics of the filter.

For a better understanding of the invention, reference is now made, by way of exemplification only, to the accompanying drawings in which:

Figure 1 is a cross-sectional view of a three-layer design thin-film interference filter possessing the same sequence of layers as described in any of EP-A-303 109, US-A-4 462 883 and GB-A-2 135 697, the thickness of the layers disclosed in these documents being different from those cited hereafter in accordance with the invention.

Figure 2 is a cross-sectional view of a five-layer design thin-film interference filter of the invention.

Figure 3 is a cross-sectional view of a nine-layer film design thin-layer interference filter of the invention.

Figure 4 is a graph illustrating the spectral transmittance and reflectance of a thin-film interference filter.

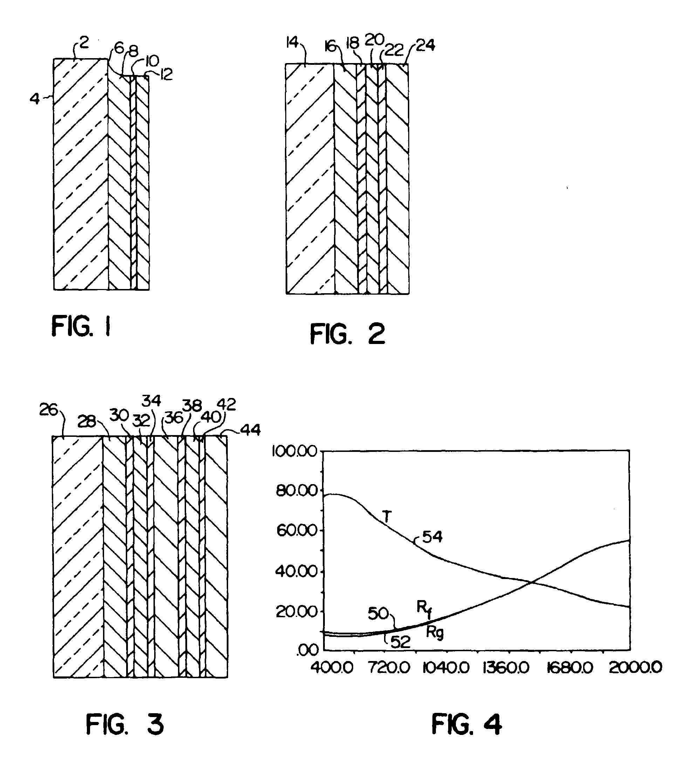

A thin-film interference filter is shown in Figure 1 possessing the same sequence of layers as that described in EP-A-303 109, the thickness and constitutive materials disclosed in that document being different to those cited hereafter. It consists of a transparent substrate 2 which is provided with two planar parallel surfaces 4 and 6, in which surface 4 is exposed to the medium and surface 6 is coated. The substrate can be formed of any suitable transparent material; however, the substrate is preferably a material which has superior structural properties and minimum absorption in the visible and near-infrared spectra regions where the solar energy is concentrated. Crystalline quartz, fused silica, soda-lime silicate glass, and plastics such as polycarbonates and acrylates, are all preferred substrate materials.

Deposited onto the substrate surface 6 is a dielectric layer 8 followed by a metal precoat layer 10. In this embodiment, silicon nitride has been found to be a particularly satisfactory dielectric material. Other dielectric materials which can also be utilised include titanium oxide, silicon oxide, zirconium oxide, and tin oxide. The thickness of the dielectric layer ranges from approximately 30 to 90 nm (300 to 900 Å), and more preferably from approximately 40 to 60 nm (400 to 600 Å).

Precoat layer 10 is preferably maintained as thin as possible so that it will have very little, if any, adverse effect upon the optical characteristics of the substrate or the subsequent metal layer. Precoat layers with thicknesses ranging from approximately 0.5 to 2 nm (5 to 20 Å) have been satisfactory; more preferably, the thickness is between approximately 0.8 to 1.2 nm (8 to 12 Å). This thin precoat layer can be formed from any number of materials. It has been found that nickel-chromium alloy comprising approximately 1 to 80 percent nickel and approximately 1 to 20 percent chromium can be used as a precoat; more preferably, the alloy content is approximately 80 percent nickel and 20 percent chromium. Other metals and alloys thereof that can be used as a precoat include nickel, chromium, rhodium, and platinum.

The precoat layer apparently acts as a glue or "nucleation" layer. It is believed that while the precoat layer is thin enough not to adversely affect the optical properties of the filter, it causes the metal film to behave as if it were a homogeneous metal slab.

Finally, a metal layer 12 is deposited onto the precoat layer. The metal layer can be formed from a number of materials, with silver being particularly satisfactory. Other metals which also can be utilised are gold, copper and platinum. The thickness of the metal layer can range from approximately 0.4 to 15 nm (40 to 150 Å), and more preferably, from approximately 5.5 to 8.5 nm (55 to 85 Å). In the embodiment as illustrated in Figure 1, the metal layer is exposed to medium and therefore the film should be positioned toward the interior environment.

To increase durability, an additional dielectric layer can be deposited (coupled with a further precoat layer) in accordance with the invention. As shown in Figure 2 a transparent substrate 14 is first coated with a dielectric layer 16, that is then followed with a precoat layer 18, and thereafter with a metal layer 20. As is apparent, the description thus far coincides with the embodiment as described in Figure 1. However, a second precoat layer 22 is deposited onto the metal layer and thereafter a final dielectric layer 24 is deposited over the second precoat layer. This second precoat layer can be formed from the same material and in the same thickness range as precoat layer 10 in Figure 1. Similarly, the final dielectric layer can be formed of the same material, and of approximately the same thickness as the dielectric layer described in Figure 1, though the preferred thickness range is between approximately 57.5 to 86 nm (575 to 860 Å). As will be described in greater detail below, this offers better mechanical and corrosion resistance.

In another embodiment of the invention as shown in Figure 3, the interference filter consists of a thin transparent substrate that is coated with a nine-layer film. The first five layers deposited onto substrate 26 are identical to those identified in Figure 2, namely: a dielectric layer 28, a precoat layer 30, a metal layer 32, a second precoat layer 34, and lastly, a second dielectric layer 36. These five layers are formed from the same materials and of the same comparable thicknesses described previously for Figure 2. However, in this embodiment, following dielectric layer 36 are four additional layers consisting of first a third precoat layer 38, a second metal layer 40, a fourth precoat layer 42, and finally, a third dielectric layer 44. The third and fourth precoat layers can be formed of the same materials and of the same thicknesses as the precoat layers described in Figures 1 and 2. Similarly, the metal layer can be formed of the same material and of the same thickness as the previously described metal layers for Figures 1 and 2. Finally, the dielectric layer can be formed of the same material and of the same thickness as previously described dielectric layers.

Aside from increasing the overall durability of the interference filter, increasing the number of layers also has the effect of increasing the electromagnetic optical interference and electric conductivity of the filter.

In addition, variations on the materials and thicknesses for each layer in each of the above-described embodiments can vary the optical and electrical characteristics of the filter. Indeed, by such variations, the light transmission can range from 10 to 80 percent of visible light. Moreover, solar rejection can range from 0 to 50 percent, and finally, the electrical sheet resistance can range from 3.0 to 30 ohm per square. The filters described in Figures 2 and 3 can be referred to as "monolithic" because there is no need for a thick protective glass cover. In these embodiments, the dielectric layers serve to protect the soft metal layers against chemical and mechanical degradation.

The films described above are prepared by DC-reactive sputtering with a rotating cylindrical magnetron. The magnetron reactive sputtering technique is particularly useful for depositing dielectric films. While there are other techniques for depositing the metal and dielectric layers such as thermal oxidation and LPCVD (low pressure chemical vapour deposition), these methods suffer from, among other things, slow deposition rates. Moreover, RF planar magnetron sputtering for depositing dielectric material is impractical for large-scale industrial applications because of the enormous power requirements; however, planar magnetrons can be used to deposit the metal and precoat layers. Finally, conventional "wet, dip and dry" methods for large-scale operations are inadequate for applications requiring high purity and precise, uniform film thicknesses. Moreover, with sputtering, no heating of the substrate is required.

A description of the method for coating substrates with dielectric materials such as silicon dioxide and silicon nitride is found in the applicants' co-pending application No. PCT US90/06459, the disclosures of which are incorporated herein by reference.

Durable low-emissivity interference films of the invention were originally deposited by a research size in-line cylindrical magnetron manufactured by Airco Coating Technology, a division of the applicant company. The same results were later duplicated in a larger cylindrical magnetron, the C-MAG (Trade Mark) model 3000 cathode, also manufactured by Airco Coating Technology under substantially the same process conditions. In addition, more sophisticated applications of the inventive method are possible with the model 3000. The research coater is capable of substrate sizes up to 40.6 cm (16 inches) wide, whereas the larger coater is capable of substrate sizes up to 1 metre wide. Research coaters normally operate at approximately 3 kw power whereas the model 3000 normally operates between 30 to 40 kw. Tests indicate that the research and model 3000 produce film of the same quality. Both systems use untrapped diffusion pumps that achieved a base pressure in the $10^{-6}$ Torr range before operation. Argon was used as an inert gas and nitrogen was used as the reactant gas when depositing silicon nitride. The partial pressure of the gas was determined by the transition from the nitride mode to the metallic mode. Experiments were run as close to that transition as practicable. The pressure and flow rate of the sputtering gases were controlled by conventional devices.

The power applied varied for the different target materials but for the most part it was comparable to the maximum obtainable with similar size planar magnetrons. Each sputtering source was connected to an appropriate direct current power source having provision for automatically maintaining the voltage, current or power, as desired.

Because the electrical conductivity of pure silicon is so low that it is unsuitable for sputtering with direct current, the silicon target was impregnated or doped with a small amount of aluminium in the range of from 2-4%. The target was prepared by plasma spray.

With nitrogen as the sputtering gas, the coating contained a mixture of aluminium and silicon nitrides. All of these components are relatively hard and form an amorphous film that acts as a strong barrier. However, the amount of aluminium in the film did not interfere with formation of the desired silicon based compound films. In the course of the experiments, films were sent out for independent RBS (Rutherford Back-Scattering) sampling to determine the composition of the compound. The silicon nitride measured 42% Si/57% N, which is very close to the theoretical 3:4 ratio for nitride ($Si_3N_4$).

The target was conditioned using an inert gas, then the process gas was added until the desired partial pressure was reached. The process was operated at that point until the process was stabilised. The substrates were then introduced to the coat zone and the film was applied. The substrate used was typically soda lime glass.

Tables 1 and 2 set forth the process data for deposition of films as described in Figure 2.

## TABLE 1

| Layer | Thickness (nm) | SCCM Ar | SCCM $N_2$ | Potential (V) | Power (kw) | Current (A) | Pressure ($\mu$) | No. Passes | Substrate Speed (cm/min) |
|---|---|---|---|---|---|---|---|---|---|
| $Si_3N_4$ | 49.0 | 12 | 60 | 452 | 4.0 | 8.68 | 2.06 | 1 | 78.2 |
| NiCr | 0.8 | 40 | n/a | 427 | 0.3 | .58 | 2.06 | 1 | 477.3 |
| Ag | 7.5 | 40 | n/a | 430 | 0.5 | 1.05 | 1.37 | 1 | 426.7 |
| NiCr | 0.8 | 40 | n/a | 389 | 0.15 | .30 | 2.06 | 1 | 477.3 |
| $Si_3N_4$ | 72.0 | 12 | 60 | 458 | 4.0 | 8.69 | 2.04 | 1 | 76.2 |

The above filter had the following optical and electrical characteristics:

| | |
|---|---|
| % Transmittance (integrated D65 source) | 75.96 |
| % Reflectance of the film covered side | 5.96 |
| % Absorbance | 16.30 |
| Electrical sheet resistance | 14.7-15.3 |

EP 0 456 487 B1

## TABLE 1

| Layer | Thickness (nm) | SCCM Ar | SCCM $N_2$ | Potential (V) | Power (kw) | Current (A) | Pressure ($\mu$) | No. Passes | Substrate Speed (cm/min) |
|---|---|---|---|---|---|---|---|---|---|
| $Si_3N_4$ | 49.1 | 12 | 60 | 600-960 | 4.0 | 8.70 | 1.85 | 1 | 58.7 |
| NiCr | 1.0 | 30 | n/a | 361 | 0.2 | .44 | 1.00 | 1 | 316.7 |
| Ag | 7.0 | 40 | n/a | 509 | 1.3 | 2.64 | 1.40 | 1 | 500.9 |
| NiCr | 1.0 | 30 | n/a | 361 | 0.2 | 0.31 | 1.02 | 1 | 361.7 |
| $Si_3N_4$ | 71.5 | 12 | 60 | 600-940 | 4.0 | 8.75 | 1.92 | 1 | 40.4 |

The above filter had the following optical and electrical characteristics:

| | |
|---|---|
| % Transmittance (integrated D65 source) | 73.57 |
| % Reflectance of the film covered side | 4.70 |
| % Absorbance | 20.00 |
| Electrical sheet resistance | 17.7-18.8 |

Curve 50 (Rf) in Figure 4 illustrates the reflectance of the interference filter produced under the parameters set forth in Table 2 as measured from the film side. Curve 52 (Rg) is the reflectance of the uncoated substrate side and curve 54 (T) is the transmittance.

A comparison of the durability of the inventive filter to prior art filters was made. The inventive filter tested consisted of a substrate coated with a five layer film as illustrated in Figure 2. For convenience, the inventive film design structure is designated as:

$$Glass/Si_3N_4/NiCr/Ag/NiCr/Si_3N_4$$

Similarly, the names and design structures of the four prior art filters are:

| Standard Low-E | $Glass/ZnO_2/Ag/Zn/ZnO_2$ |
|---|---|
| Super-E II Neutral | $Glass/ZnO_2/Ag/Zn/ZnO_2/TiO_2/ZnO_2$ |
| Phase I | $Glass/ZnO_2/Al_2O_3/Ag/Al/Al_2O_3/ZnO_2$ |
| Phase II | $Glass/SiO_2/ZnO_2/Ag/Zn/ZnO_2/SiO_2$ |

The procedures of the tests that were performed on these filters are described herein and a tabulation of the results follows thereafter.

Abrasion Resistance: The durability of the filters was measured with a Taber Abrader. A CS10F wheel with 500g weights was used. For the standard Taber score the sample was rotated under wheels for 50 revolutions. The area of the abrade was observed through a microscope at 50 times magnification and a picture was taken. Four 2.54 x 2.54 cm (1" x 1") squares were drawn on the picture in random places and the number of scratches inside these squares was counted. The number of scratches in all four squares was averaged and the part was given a Taber score based on the following formula:

$$TABER\ SCORE = \#\ SCRATCHES * (-0.18) + 10$$

The Taber score is a linear scale where no scratches is a 10, and 50 scratches is a 0. For reference, uncoated soda lime glass typically scores about 9.0.

72 Hour High Temperature Humidity

| Duration: | 72 hours |
|---|---|
| Temperature: | 92°C |
| RH: | 98% |

24 Hour (Mil. Spec.) Humidity

| Duration: | 24 hours |
|---|---|
| Temperature: | 50°C |
| RH: | 98% |

24 Hour Salt Fog

| Duration: | 24 hours |
|---|---|
| Temperature: | 50°C |
| 20% NaCl addition to water supply | |

Steam Test

| Duration: | 10 minutes |
|---|---|
| Temperature: | Water brought and maintained at a boil |

Eraser Test

Mil. Spec. erasure rubbed forcibly 20 times
    (one stroke = 1 rub)

Fingerprint Simulation

Samples were exposed to a solution of lanolin oil and NaCl. The samples were assigned a score (0-10) based on the damage, a 0 being total damage.

| Results | | | | | |
|---|---|---|---|---|---|
| | Standard Low-E | Super-E II | Phase I | Phase II | Inventive Filter |
| Steam | Fail | -- | Pass | Pass | Pass |
| Erasure | Fail | Fail | Fail | 100 Pass | 500 Pass |
| Taber | Fail | Fail | 20 Pass | 50 Pass | 50 Pass |
| Score | 0 | 0 | 0 | 9.0 | 9.1-9.5 |
| 72-Hr. Humidity | Fail | -- | Fail | Fail | Pass |
| 24-Hr. Humidity | Fail | Pass | -- | Pass | Pass |
| 24-Hr. Salt Fog | Fail | Fail | Fail | Fail | Pass |
| Lanolin | Fail | -- | -- | Fail | Pass |
| Score | 0 | | | 0.5 | 9.5 |

**Claims**

1. An optical interference filter comprising:

   - a transparent substrate (14);
   - a first substantially transparent dielectric layer (16);
   - a first metal precoat layer (18);
   - a partially reflective metal layer (20);
   - a second metal precoat layer (22); and
   - a second substantially transparent dielectric layer (24)

   characterised in that:

   - the thickness of the first and second dielectric layers is comprised between 30 and 90 nm;
   - the thickness of the first and second precoat layers is comprised between 0.5 and 2 nm;
   - the thickness of the partially reflective metal layer is comprised between 4 and 15 nm; and
   - the second dielectric layer comprises silicon nitride.

2. An interference filter according to Claim 1 in which the first dielectric layer comprises silicon nitride.

3. An interference filter according to Claim 1 in which the first dielectric layer comprises a metal oxide.

4. An interference filter according to Claim 1 in which the first dielectric layer is comprised of one or more of titanium oxide, silicon oxide, aluminium oxide, tantalum oxide, zirconium oxide and tin oxide.

**5.** An interference filter according to Claim 4 in which the first dielectric layer comprises titanium oxide.

**6.** An interference filter according to any preceding claim in which the partially reflective metal layer is a metal or an alloy of one or more of silver, gold, copper and platinum.

**7.** An interference filter according to any preceding claim in which at least one precoat layer is formed from a metal or an alloy of one or more of nickel, chromium, rhodium and platinum.

**8.** An interference filter according to Claim 7 in which at least one precoat layer is formed from an alloy comprising from 1 to 80 percent nickel and from 1 to 20 percent chromium.

**9.** An interference filter according to Claim 7 in which at least one precoat layer is formed from an alloy comprising approximately 80 percent nickel and approximately 20 percent chromium.

**10.** A method for the production a an interference filter on a transparent substrate according to any one of Claims 1 to 9 with the filter having a substantially neutral visible reflected colour, comprising the steps, in sequence, of:

- reactively sputtering a first substantially transparent dielectric layer;
- depositing a first metal precoat layer;
- depositing a partially reflective metal layer;
- depositing a second metal precoat layer; and
- reactively sputtering onto said second metal precoat layer a second substantially transparent protective dielectric layer comprising silicon nitride

to produce a filter in which:

- the thickness of the first and second dielectric layers is comprised between 30 and 90 nm;
- the thickness of the first and second precoat layers is comprised between 0.5 and 2 nm;
- the thickness of the partially reflective metal layer is comprised between 4 and 15 nm

**Patentansprüche**

**1.** Optisches Interferenzfilter mit:

- einem transparenten Substrat (14),

- einer ersten im wesentlichen transparenten dielektrischen Schicht (16),

- einer ersten Metallzwischenschicht (18),

- einer teilreflektierenden Metallschicht (20),

- einer zweiten Metallzwischenschicht (22), und

- einer zweiten im wesentlichen transparenten dielektrischen Schicht (24),

dadurch gekennzeichnet, daß

- die Dicke der ersten und der zweiten dielektrischen Schicht jeweils zwischen 30 und 90 nm liegt,

- die Dicke der ersten und der zweiten Zwischenschicht zwischen 0,5 und 2 nm liegt,

- die Dicke der teilreflektierenden Metallschicht zwischen 4 und 15 nm liegt, und

- die zweite dielektrische Schicht aus Siliziumnitrid besteht.

**2.** Interferenzfilter nach Anspruch 1, wobei die erste dielektrische Schicht aus Siliziumnitrid besteht.

**3.** Interferenzfilter nach Anspruch 1, wobei die erste dielektrische Schicht aus einem Metalloxid besteht.

**4.** Interferenzfilter nach Anspruch 1, wobei die erste dielektrische Schicht aus einem oder mehreren der Stoffe Titanoxid, Siliziumoxid, Aluminiumoxid, Tantaloxid, Zirkoniumoxid und Zinnoxid besteht.

**5.** Interferenzfilter nach Anspruch 4, wobei die erste dielektrische Schicht aus Titanoxid besteht.

**6.** Interferenzfilter nach einem der vorhergehenden Ansprüche, wobei die teilreflektierende Metallschicht aus einem Metall oder Legierung eines oder mehrerer Metalle aus der Gruppe Silber, Gold, Kupfer und Platin besteht.

**7.** Interferenzfilter nach einem der vorhergehenden Ansprüche, wobei mindestens eine Zwischenschicht aus einem Metall oder einer Legierung aus einem oder mehreren Metallen der Gruppe Nickel, Chrom, Rhodium und Platin besteht.

**8.** Interferenzfilter nach Anspruch 7, wobei mindestens eine Zwischenschicht aus einer Legierung aus 1 bis 80 % Nickel und 1 bis 20 % Chrom besteht.

**9.** Interferenzfilter nach Anspruch 7, wobei mindestens eine Zwischenschicht aus einer Legierung mit etwa 80 % Nickel und etwa 20 % Chrom besteht.

**10.** Verfahren zur Herstellung eines Interferenzfilters auf einem transparenten Substrat nach einem der Ansprüche 1 bis 9, wobei das Filter eine im wesentlichen neutrale sichtbare reflektierte Farbe hat, mit den aufeinanderfolgenden Schritten

- reaktives Zerstäubungsaufdampfen einer ersten im wesentlichen transparenten dielektrischen Schicht,

- Aufbringen einer ersten Metallzwischenschicht,

- Aufbringen einer teilreflektierenden Metallschicht,

- Aufbringen einer zweiten Metallzwischenschicht, und

- reaktives Zerstäubungsaufdampfen einer zweiten im wesent lichen transparenten dielektrischen Schutzschicht aus Siliziumnitrid auf die zweite Metallzwischenschicht

zur Herstellung eines Filters, wobei

- die Dicke der ersten und der zweiten dielektrischen Schicht zwischen 30 und 90 nm beträgt,

- die Dicke der ersten und der zweiten Zwischenschicht zwischen 0,5 und 2 nm beträgt,

- die Dicke der teilreflektierenden Metallschicht zwischen 4 und 15 nm beträgt.


**Revendications**

**1.** Filtre interférentiel optique, comprenant:

- un substrat transparent (14);
- une première couche de diélectrique (16) sensiblement transparente;
- une première sous-couche de métal (18);
- une couche de métal (20) partiellement réfléchissante;
- une seconde sous-couche de métal (22); et
- une seconde couche de diélectrique (24) sensiblement transparente,

filtre caractérisé en ce que:

- l'épaisseur des première et seconde couches de diélectrique est comprise entre 30 et 90 nm;
- l'épaisseur des première et seconde sous-couches est comprise entre 0,5 et 2 nm;
- l'épaisseur de la couche de métal partiellement réfléchissante est comprise entre 4 et 15 nm; et
- la seconde couche de diélectrique est constituée par, ou comprend, du nitrure de silicium.

2. Filtre interférentiel selon la revendication 1, dans lequel la première couche de diélectrique est constituée par, ou comprend, du nitrure de silicium.

3. Filtre interférentiel selon la revendication 1, dans lequel la première couche de diélectrique est constituée par, ou comprend, un oxyde de métal.

4. Filtre interférentiel selon la revendication 1, dans lequel la première couche de diélectrique est constituée d'une ou plusieurs des matières suivantes: oxyde de titane, oxyde de silicium, oxyde d'aluminium, oxyde de tantale, oxyde de zirconium et oxyde d'étain.

5. Filtre interférentiel selon la revendication 4, dans lequel la première couche de diélectrique est constituée par, ou comprend, de l'oxyde de titane.

6. Filtre interférentiel selon l'une quelconque des revendications précédentes, dans lequel la couche de métal partiellement réfléchissante est formée d'un métal ou d'un alliage d'un ou plusieurs des métaux suivants: l'argent, l'or, le cuivre et le platine.

7. Filtre interférentiel selon l'une quelconque des revendications précédentes, dans lequel au moins une sous-couche est formée en un métal ou en un alliage d'un ou plusieurs des métaux suivants : nickel, chrome, rhodium et platine.

8. Filtre interférentiel selon la revendication 7, dans lequel au moins une sous-couche est formée d'un alliage comprenant 1 à 80 pour-cent de nickel et 1 à 20 pour-cent de chrome.

9. Filtre interférentiel selon la revendication 7, dans lequel au moins une sous-couche est formée d'un alliage comprenant environ 80 pour-cent de nickel et environ 20 pour-cent de chrome.

10. Procédé pour la production d'un filtre interférentiel sur un substrat transparent, selon l'une quelconque des revendications 1 à 9, le filtre ayant une couleur sensiblement neutre de réflexion de la lumière visible, le procédé comprenant les étapes successives consistant à:

- projeter par pulvérisation électrique réactive une première couche de diélectrique sensiblement transparente;
- déposer une première sous-couche de métal;
- déposer une couche de métal partiellement réfléchissante;
- déposer une seconde sous-couche de métal; et
- projeter, par pulvérisation électrique réactive, sur ladite seconde sous-couche de métal, une seconde couche de diélectrique protecteur, sensiblement transparente, comprenant du nitrure de silicium,

pour produire un filtre dans lequel:

- l'épaisseur des première et seconde couches de diélectrique se situe entre 30 et 90 nm;
- l'épaisseur des première et seconde sous-couches est comprise entre 0,5 et 2 nm;
- l'épaisseur de la couche de métal partiellement réfléchissante est comprise entre 4 et 15 nm.

FIG. 1

FIG. 2

FIG. 3

FIG. 4